# EUROPÄISCHE PATENTANMELDUNG

(11) **EP 3 312 044 A1**
(43) Veröffentlichungstag der Anmeldung: **25.04.2018**
(21) Anmeldenummer: 17195410.0
(22) Anmeldetag: 09.10.2017
(51) Int. Cl.: B60L 11/18

(54) **LADESTATION FÜR ELEKTROFAHRZEUGE**

(30) Priorität: 19.10.2016 DE 102016119917; 13.01.2017 DE 102017100638
(71) Anmelder: Elektro-Bauelemente GmbH, 44536 Lünen (DE)
(72) Erfinder: Kachouh, Checrallah, 44227 Dortmund (DE); Jendrusch, Peter, 44536 Lünen (DE); Heide, Thomas, 44137 Dortmund (DE); Terletzki, Marcel, 59387 Ascheberg (DE)
(74) Vertreter: Wickord, Wiro

(57) **Zusammenfassung**

Die Erfindung betrifft eine Ladestation für Elektrofahrzeuge umfassend ein Gehäuse (1), umfassend ein aus dem Gehäuse (1) geführtes Ladekabel (2), umfassend einen an einem freien Ende des Ladekabels (2) festgelegten Ladestecker (3), umfassend eine Laufschiene (4), an der das Ladekabel (2) längsverschiebbar gehalten ist, und umfassend ein an der Laufschiene (4) gehaltenes Gewichtsausgleichsmodul (5), über das der Ladestecker (3) jedenfalls mittelbar gehalten ist, wobei das Gewichtsausgleichsmodul (5) längsverschiebbar an der Laufschiene (4) gehalten ist.

## Beschreibung

Die Erfindung betrifft eine Ladestation für Elektrofahrzeuge umfassend ein Gehäuse, umfassend ein aus dem Gehäuse geführtes Ladekabel, umfassend einen an einem freien Ende des Ladekabels festgelegten Ladestecker, umfassend eine Laufschiene, an der das Ladekabel längsverschiebbar gehalten ist, und umfassend ein an der Laufschiene gehaltenes Gewichtsausgleichsmodul, über das der Ladestecker jedenfalls mittelbar gehalten ist.

Ladestationen werden heute im zunehmenden Maße im öffentlichen Raum sowie im privaten und im beruflichen Umfeld bereitgehalten, um elektrisch betreibbare Fahrzeuge mit elektrischer Energie zu versorgen. Vorgesehen ist hierzu ein an dem Gehäuse der Ladestation angeschlagenes Ladekabel mit einem an einem freien Ende des Ladekabels vorgesehenen Ladestecker, welcher ausgebildet ist zum Ansetzen desselben an ein an dem Fahrzeug vorgesehenes Gegensteckelement. Der Ladestecker weist insofern an einer Vorderseite eine genormte Schnittstellengeometrie, das sogenannte Steckgesicht auf. Hierbei werden unterschiedliche Schnittstellengeometrien für unterschiedliche Regionen, unterschiedliche Ladeleistungen und/oder das Laden mit Gleichstrom beziehungsweise Wechselstrom vorgesehen.

Gemein ist den Ladestationen, dass in dem Gehäuse eine Ansteuerelektronik sowie jedenfalls für DC-Ladestationen - eine Leistungselektronik vorgesehen sind. Typischerweise sind die Ladestationen im öffentlichen Bereich oder im Privatbereich aufgestellt und unmittelbar oder mittelbar an das öffentliche Stromnetz angeschlossen sind. Eine Abrechnung des Ladevorgangs erfolgt im privaten Bereich bevorzugt unmittelbar über den Energieversorger und im öffentlichen Raum vorgangsbezogen über den Betreiber der Ladestation oder einen Serviceprovider, der eine Mittlerrolle zwischen dem Endkunden und dem Betreiber der Ladestation einnimmt.

Eine Ladestation mit einer speziellen, eine Laufschiene aufweisenden Halterung für das Ladekabel ist aus der DE 10 2015 201 211 A1 bekannt. Es ist hier vorgesehen, den Ladestecker über ein nach Art eines Balancers ausgebildetes Gewichtsausgleichsmodul zu halten. Der Balancer ist hierbei an einem freien Ende der Laufschiene festgelegt. Das Ladekabel ist über in der Laufschiene geführte Schlitten längsverschiebbar an der Laufschiene aufgehängt. Zusätzlich sind dem Ladekabel Manipulatoren zugeordnet zum Bewegen und/oder Positionieren des Ladekabels. Das Ladekabel ist an der Ladestation angeschlagen. Das Ladekabel wird dem Ladestecker auf einer der Vorderseite gegenüberliegenden Rückseite zugeführt.

Aufgabe der vorliegenden Erfindung ist es, eine gattungsgemäße Ladestation für Elektrofahrzeuge derart weiterzubilden, dass die Handhabung der Ladestation insgesamt und insbesondere das Ansetzen des Ladesteckers an ein an dem Elektrofahrzeug vorgesehenes Gegensteckelement vereinfacht wird.

Zur Lösung der Aufgabe ist die Erfindung in Verbindung mit dem Oberbegriff des Patentanspruchs 1 dadurch gekennzeichnet, dass das Gewichtsausgleichsmodul längsverschiebbar an der Laufschiene gehalten ist. Insbesondere ist die Laufschiene als Teil der Ladestation ausgebildet und mit dem Gehäuse der Ladestation verbunden beziehungsweise ragt von diesem ab.

Der besondere Vorteil der Erfindung besteht darin, dass durch das längsverschiebbare Festlegen des Gewichtsausgleichsmoduls an der Laufschiene der Ladestecker in einfacher Weise entlang der Laufschiene bewegt und in weiten Bereichen frei positioniert werden kann. Die erfindungsgemäße Ladestation ist daher in besonderer Weise geeignet, für unterschiedlichste Fahrzeuge verwendet und eingesetzt zu werden. Insbesondere besteht ein hohes Maß an Freiheit in Bezug auf die Größe des Fahrzeugs, seine relative Parkposition bezogen auf die Anordnung der Ladestation und die Position beziehungsweise Lage des Gegensteckelements an dem Fahrzeug. Ein Ansetzen des Ladesteckers ist insofern in einfacher Weise beispielsweise dann möglich, wenn das Gegensteckelement an dem Fahrzeug im Bereich der Fahrzeugfront oder am Fahrzeugheck vorgesehen ist. Ebenso lässt sich der Ladestecker in einfacher Weise an ein Gegensteckelement ansetzen, was auf der Fahrerseite beziehungsweise Beifahrerseite im Bereich der A-Säule oder im Bereich der C-Säule vorgesehen ist. Das Gewichtsausgleichsmodul führt hierbei dazu, dass das Ladekabel mit seinem Gewicht aktiv angehoben ist. Einer Beschädigung des Fahrzeugs und insbesondere eines Zerkratzens einer Lackierung des Fahrzeugs ist insofern vorgebeugt.

Nach einer bevorzugten Ausführungsform der Erfindung ist das Gewichtsausgleichsmodul unmittelbar mit dem Ladekabel verbunden. Ein zwischen dem Ladekabel einerseits und einem Auszugsseil des Gewichtsausgleichsmoduls andererseits gebildeter Verbindungspunkt ist dabei beabstandet von dem freien Ende des Ladekabels vorgesehen. Vorteilhaft wird nach der Erfindung das Ladekabel durch das Gewichtsausgleichsmodul gehalten beziehungsweise gestützt. Der an dem freien Ende des Ladekabels vorgesehene Ladestecker ist insofern frei beweglich und nicht unmittelbar mit dem Gewichtsausgleichsmodul verbunden beziehungsweise durch dieses gehalten. Eine freie Positionierung des Ladesteckers ist insofern begünstigt. Darüber hinaus kann das Auszugsseil des Gewichtsausgleichsmoduls in einer Nichtverwendungsstellung vollständig in einem Gehäuse des Gewichtsausgleichsmoduls umfasst sein. Es ist hierdurch witterungsgeschützt angeordnet und vor Manipulation beziehungsweise Vandalismus geschützt. Das längsverschiebbar an der Laufschiene gehaltene Gewichtsausgleichsmodul dient insofern zum Halten des Ladekabels mit dem Ladestecker einerseits und als Manipulator beziehungsweise Positionsmittel für das Ladekabel andererseits. Auf separate Manipulatoren beziehungsweise Positioniermittel für das Ladekabel, beispielsweise Rollenführungsmittel, Schwenkarme oder separate, vertikal wirksame Verstellmittel für das Ladekabel kann insofern verzichtet werden mit der Folge, dass die erfindungsgemäße Ladestation zugleich robust ausgebildet ist und äußerst kompakt baut. Sie kann insofern platzsparend vorgesehen und kostengünstig ausgebildet sein.

Nach einer Weiterbildung der Erfindung weist der Ladestecker ein Steckergehäuse und an einer Vorderseite des Steckergehäuses ein Steckgesicht auf, welches ausgebildet ist zum Ansetzen an ein korrespondierend gestaltetes Steckgesicht eines Gegensteckelements des Elektrofahrzeugs. Bezogen auf das Steckgesicht und eine Verbindungsposition des Ladesteckers, in der der Ladestecker in das Gegensteckelement eingesetzt ist, wird das Ladekabel dem Steckergehäuse von oben zugeführt. Die Zuführung des Ladekabels zu dem Steckergehäuse von oben ist vorteilhaft aufgrund der hängenden Anordnung des Ladekabels an der Laufschiene. Die Positionierung des Ladesteckers in Bezug auf seine horizontale und vertikale Position ist durch die Zuführung des Ladekabels von oben besonders einfach. Insbesondere wird vorliegend von der in der Praxis allein bekannten Lösung, das Ladekabel dem Steckergehäuse von hinten beziehungsweise von unten zuzuführen, Abstand genommen. Der neuartige Anschluss des Ladekabels an das Steckergehäuse führt insofern konsequent den Gedanken der vereinfachten Handhabung des angeschlagenen Ladekabels mit dem Ladestecker fort.

Im Sinne der Erfindung wird die Zuführung des Ladekabels zu dem Ladestecker festgelegt in Bezug auf eine Verbindungsposition, in dem der Ladestecker mit dem Gegensteckelement des Elektrofahrzeugs verbunden ist oder ersatzweise an ein an dem Gehäuse der Ladestation vorgesehenes Adapterelement angesetzt ist, welches ohne elektrische Funktion und in Bezug auf die mechanischen Schnittstellen der Geometrie des Gegensteckelements angepasst ist. Optional kann der Ladestecker in dem Adapterelement verriegelt werden, sodass eine Entnahme nur autorisiert erfolgen kann. Eine Zuführung des Ladekabels von oben zu dem Ladestecker ist im Sinne der Erfindung stets dann realisiert, wenn in der Verbindungsposition bei einer zumindest näherungsweise vertikalen Orientierung des Steckgesichts das Ladekabel im Bereich einer Oberseite des Steckergehäuses demselben zugeführt wird und/oder das Ladekabel unter einem spitzen Winkel bezogen auf die Vertikale von oben zugeführt wird. Die Zuführung unter einem spitzen Winkel kann dann beispielsweise auch im Bereich einer Rückseite des Steckergehäuses realisiert sein.

Nach einer Weiterbildung der Erfindung ist das Ladekabel als ein Hochstromladekabel ausgebildet. Vorteilhaft kann durch das Vorsehen des Ladekabels als Hochstromladekabel der Ladevorgang mit einer Leistung von mehr als 300 kW und gegebenenfalls bis zu 500 kW innerhalb kurzer Zeit durchgeführt werden. Es ist dabei so, dass zur Realisierung des Hochstromladekabels üblicherweise Kabelquerschnitte von 120 mm² bis 150 mm² realisiert sind mit der Folge, dass die Handhabung des Ladekabels aufgrund des Gewichts und der geringen Flexibilität aufwendig ist und typischerweise einer großen Kraftanstrengung bedarf. Hier sind die erfindungsgemäße Halterung des Ladekabels an der Laufschiene und/oder die Zuführung des Ladekabels von oben von besonderem Vorteil.

Nach einer Weiterbildung der Erfindung ist das Hochstromladekabel fluidisch gekühlt. Insbesondere kann das Hochstromladekabel luftgekühlt oder flüssigkeitsgekühlt ausgebildet sein. Vorteilhaft kann durch das Vorsehen eines fluidisch gekühlten Hochstromladekabels der Querschnitt des Ladekabels reduziert werden. Beispielsweise kann für das flüssigkeitsgekühlte Hochstromladekabel ein Kabelquerschnitt im Bereich von 16 mm² bis 35 mm² realisiert sein. Durch die Reduzierung des Kabelquerschnitts kann das Gewicht des Ladekabels vermindert und die Flexibilität des Ladekabels verbessert werden mit der Folge, dass das Gewichtsausgleichsmodul kleiner dimensioniert werden kann und sich die Handhabung des Ladekabels weiter vereinfacht.

Nach einer Weiterbildung der Erfindung ist der Ladestecker für eine Zweihandbedienung ausgebildet. Er weist hierzu einen ersten Griff sowie einen zweiten Griff auf. Vorteilhaft vereinfacht das Vorsehen der Zweihandbedienung die Handhabung des Ladesteckers weiter. Der erste Griff und der zweite Griff können insbesondere derart angeordnet und zueinander beabstandet sein, dass ein Verdrehen des Ladesteckers in einer horizontalen Ebene und/oder in wenigstens einer hierzu senkrechten vertikalen Ebene vereinfacht und damit das Ansetzen des Ladesteckers an das Gegensteckelement des Fahrzeugs bequem ermöglicht wird.

Nach einer Weiterbildung der Erfindung ist die Laufschiene horizontal geneigt angeordnet. Es ist hierbei vorteilhaft ein an dem Gehäuse vorgesehenes Ende der Laufschiene unterhalb eines freien Endes der Laufschiene vorgesehen. Vorteilhaft wird durch die horizontal geneigte Anordnung der Laufschiene eine Vorzugsposition für das Ladekabel beziehungsweise das längsverschiebbar an der Laufschiene gehaltene Gewichtsausgleichsmodul definiert. Es ist insbesondere so, dass in einer Nichtverwendungsstellung das Gewichtsausgleichsmodul an dem Gehäuse der Ladestation vorgesehen ist. Es vereinfacht sich hierdurch das Anfahren der Ladestation mit einem Elektrofahrzeug.

Beispielsweise ist eine Neigung der Laufschiene im Bereich 0° bis 15° bezogen auf die Horizontale vorgesehen. Vorteilhaft ist in diesem Winkelbereich ein Verschieben des Gewichtsausgleichsmoduls an der Laufschiene mit einem vergleichsweise geringen Kraftaufwand möglich. Das Verschieben des Gewichtsausgleichsmoduls an der Laufschiene kann insofern manuell realisiert sein. Optional kann ein Antrieb vorgesehen sein, welcher ausgebildet ist zum aktiven Verfahren des Gewichtsausgleichsmoduls an der Laufschiene.

Nach einer Weiterbildung der Erfindung kann das Gewichtsausgleichsmodul als ein manuell betätigbarer Balancer ausgebildet sein. Es ist hierbei eine federbelastete Seilwinde mit dem Auszugsseil vorgesehen. Nach einer alternativen Ausführungsform kann das Gewichtsausgleichsmodul als eine motorisch betätigte Seilwinde vorgesehen sein, welche zur Unterstützung einer Betätigungsbewegung angetrieben wird, sobald eine Zug- und/oder Schubbelastung auf das Ladekabel aufgeprägt ist.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Fig. 1: eine perspektivische Prinzipdarstellung einer Ladestation mit einem angeschlagenen Ladekabel, welches über ein Gewichtsausgleichsmodul längsverschiebbar in einer Laufschiene gehalten ist,
- Fig. 2: eine Seitenansicht der Ladestation nach Fig. 1 mit dem Ladekabel in einer Nichtverwendungsstellung,
- Fig. 3: die Ladestation nach Fig. 2 in einer ersten Auszugsstellung,
- Fig. 4: die Ladestation nach Fig. 2 in einer zweiten Auszugsstellung,
- Fig. 5: eine Detailansicht eines Schlittens der erfindungsgemäßen Ladestation,
- Fig. 6: eine perspektivische Ansicht einer ersten Ausführungsform eines Ladesteckers der Ladestation,
- Fig. 7: den Ladestecker nach Fig. 6 in einer Vorderseitenansicht,
- Fig. 8: den Ladestecker nach Fig. 6 in einer Unterseitenansicht,
- Fig. 9: eine perspektivische Ansicht einer zweiten Ausführungsform des Ladesteckers,
- Fig. 10: eine Vorderseitenansicht des Ladesteckers nach Fig. 9 und
- Fig. 11: eine Unterseitenansicht des Ladesteckers nach Fig. 9.

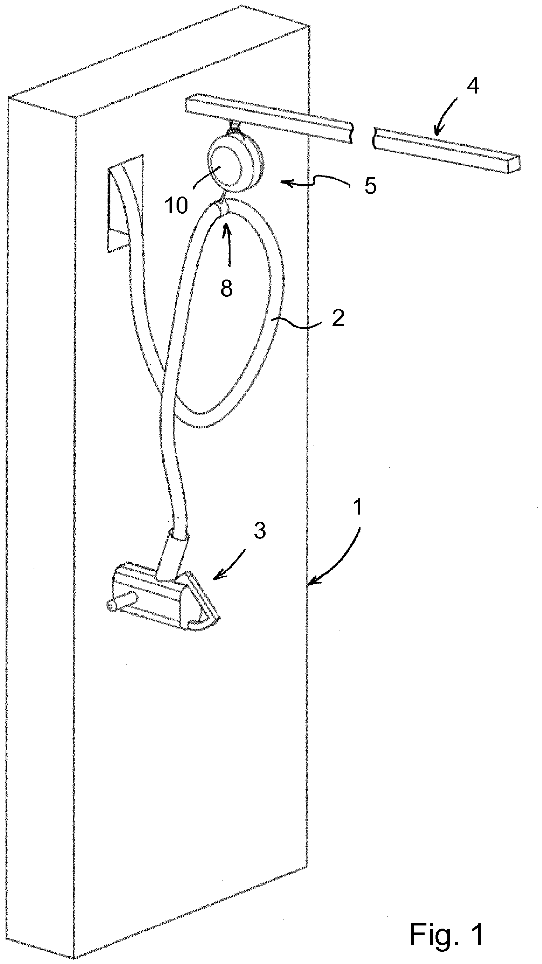

Eine Ladestation für Elektrofahrzeuge nach den Fig. 1 bis 4 umfasst als wesentliche Komponenten ein Gehäuse 1, ein aus dem Gehäuse 1 geführtes Ladekabel 2, einen Ladestecker 3, welcher an einem freien Ende des Ladekabels 2 festgelegt ist, eine Laufschiene 4, welche von dem Gehäuse 1 der Ladestation abragt, sowie ein Gewichtsausgleichsmodul 5, welches an der Laufschiene 4 gehalten ist und das Ladekabel 2 hält. Die Laufschiene 4 ist unter einem Neigungswinkel 6 geneigt zur Horizontalen angeordnet. Das Gewichtsausgleichsmodul 5 ist längsverschiebbar an der Laufschiene 4 gehalten. Exemplarisch ist zur Realisierung der Längsverschiebbarkeit des Gewichtsausgleichsmoduls 5 ein rollengeführter Schlitten 21 vorgesehen.

Eine Länge 7 der Laufschiene 4 entspricht vorliegend etwa dem 0,4-fachen einer Länge des Ladekabels 2, welches über das Gewichtsausgleichsmodul 5 an der Laufschiene 4 aufgehängt ist. Eine Festlegung des Ladekabels 2 erfolgt über das Gewichtsausgleichsmodul 5 an einem Verbindungspunkt 8, welcher beabstandet von dem freien Ende des Ladekabels 2 vorgesehen ist. Ein Abstand zwischen dem Verbindungspunkt 8 und dem freien Ende des Ladekabels 2 entspricht vorliegend etwa der 0,3-fachen Länge des Ladekabels 2.

Das Gewichtsausgleichsmodul 5 ist nach Art eines manuell betätigbaren Balancers ausgebildet. Der Balancer 5 umfasst eine federbelastete Seilwinde für ein Auszugsseil 9. Die Seilwinde ist in einem Gehäuse 10 des Balancers 5 vorgesehen. Zur Realisierung der Längsverschiebung des Balancers 5 an der Laufschiene 4 sind exemplarisch Laufrollen 11 als Teil des Schlittens 21 realisiert.

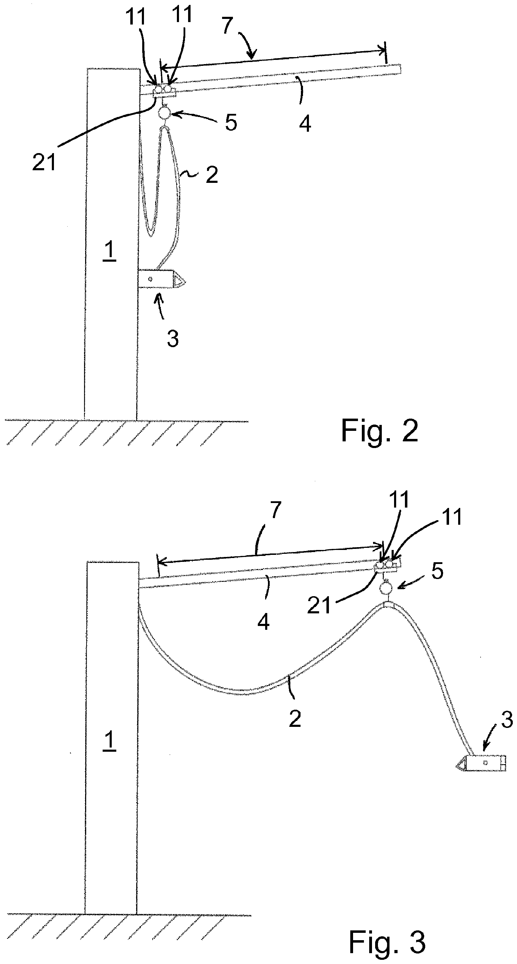

Eine Handhabung der Ladestation wird nachfolgend anhand der Fig. 2 bis 4 diskutiert.

In einer Nichtverwendungsstellung der Ladestation nach Fig. 2 ist der Balancer 5 in einer zu dem Gehäuse 1 der Ladestation benachbarten Grundposition an der Laufschiene 4 vorgesehen. Der Ladestecker 3 ist in ein nicht dargestelltes, an dem Gehäuse 1 der Ladestation vorgesehenes Adapterelement eingesetzt. Das Ladekabel 2, welches unter einem spitzen Winkel zur Vertikalen nach unten aus dem Gehäuse 1 der Ladestation herausgeführt ist, wird in einer Schlaufe über dem Balancer 5 dem Ladestecker 3 von oben zugeführt. Das Auszugsseil 9 des Balancers 5 ist nicht ausgezogen.

In einer ersten Auszugsstellung nach Fig. 3 ist der Balancer 5 längsverschoben an der Laufschiene 4 in einer äußeren Verfahrposition angeordnet. Der Ladestecker 3, welcher mit dem Ladekabel 2 verbunden ist und über das Ladekabel 2 hängend an der Laufschiene 4 gehalten wird, ist aus dem Adapterelement der Ladestation entnommen und kann in ein Gegensteckelement eines nicht dargestellten Elektrofahrzeugs eingesetzt werden. Die Handhabung des Ladesteckers 3 ist hierbei aufgrund der hängenden Anordnung des Ladekabels 2 insbesondere in einer horizontalen Ebene ohne große Kraftanstrengung möglich. Der Ladestecker 3 sieht an einer Vorderseite desselben ein Steckgesicht 12 vor, welches in der dargestellten ersten Auszugstellung eine vertikal orientiert ist.

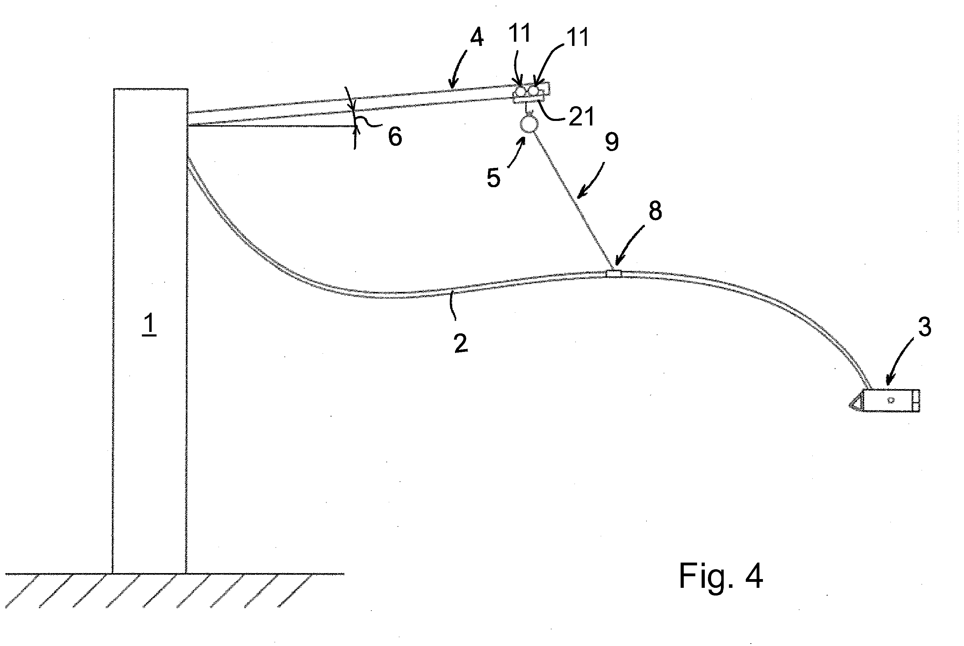

Nach der Fig. 4 ist in einer zweiten Auszugsstellung das Auszugsseil 9 des Balancers 5 zusätzlich herausgezogen. Der Ladestecker 3 kann insofern in einer veränderlichen vertikalen Position vorgesehen werden. Die vertikale Positionierung des Ladesteckers 3 erfolgt dabei im Wesentlichen kraftfrei, da der Balancer 5 über die federbelastete Seilwinde die Gewichtskraft des Ladekabels 2 mit dem daran endseitig festgelegten Ladestecker 3 jedenfalls näherungsweise ausgleicht. Eine freie Positionierung des Ladesteckers 3 kann insofern mit einer geringen Betätigungskraft erfolgen. Auch in der zweiten Auszugstellung ist das Steckgesicht 12 in einer vertikalen Orientierung vorgesehen.

Der Ladestecker 3 ist nach der Erfindung so ausgebildet, dass das Ladekabel 2 den Ladestecker 3 von oben zugeführt wird. Zusätzlich sind an dem Gehäuse 10 des Ladesteckers 3 wenigstens ein erster Griff 14 sowie ein zweiter Griff 19 vorgesehen. Durch das Vorsehen der Griffe 14, 19 ist eine Zweihandbedienung des Ladesteckers 3 realisiert. Die Zweihandbedienung vereinfacht die Handhabung des Ladesteckers 3 weiter und entlastet den Benutzer insbesondere bei der Positionierung des Ladesteckers 3 für den Fall, dass das Ladekabel 2 wenig flexibel beziehungsweise biegsam ausgebildet ist und ein hohes Eigengewicht aufweist. Dies ist insbesondere für Hochstromladekabel der Fall, welche einen üblichen Querschnitt von 120 mm² bis 150 mm² aufweisen.

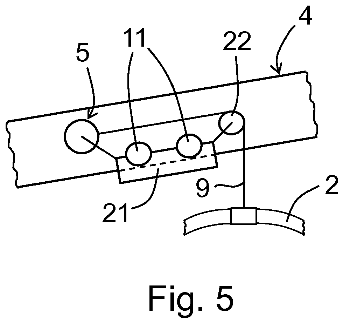

Eine geschützte Anordnung des Balancers 5 in der Laufschiene 4 ergibt sich bei einer Anordnung nach Fig. 5, indem der Balancer 5 oberhalb des Schlittens 21 in der durch ein längsgeschlitztes Hohlprofil gebildeten Laufschiene 4 geführt ist. Das Auszugsseil 9 ist hier beispielhaft über eine Umlenkrolle 22 geführt.

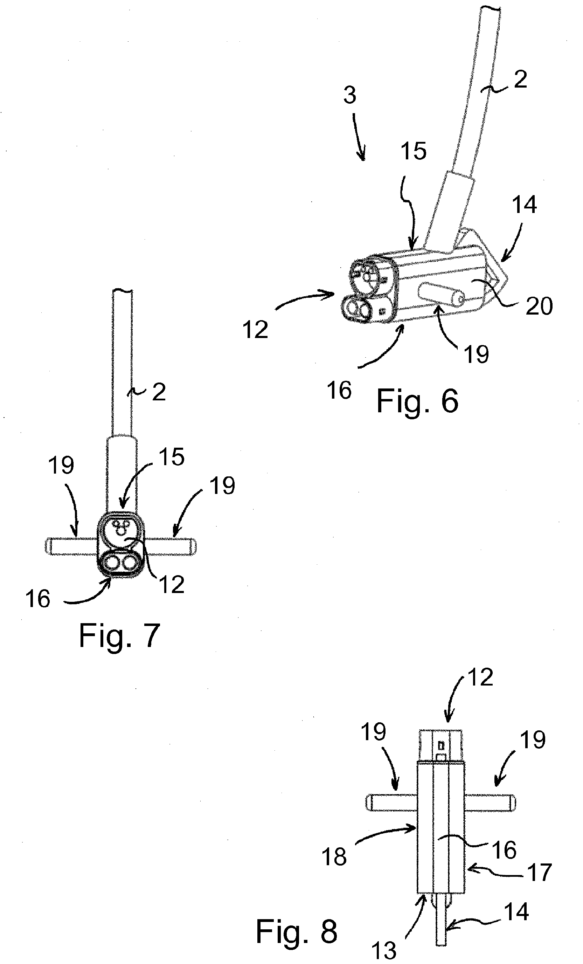

Eine erste Ausführungsform des Ladesteckers 3 mit einem Steckergehäuse 20 ist in den Fig. 6 bis 8 dargestellt. Der Ladestecker 3 weist an der Vorderseite desselben das Steckgesicht 12 auf, welches ausgebildet ist zum Ansetzen des Ladesteckers 3 an ein nicht dargestelltes Gegensteckelement des Elektrofahrzeugs. Der das Steckgesicht 12 aufweisenden Vorderseite gegenüberliegend ist eine Rückseite 13 mit dem ersten Griff 14 realisiert. Zum Verbinden der Vorderseite mit der Rückseite 13 sind eine Oberseite 15, eine Unterseite 16 sowie zwei einander gegenüberliegende Verbindungsseiten 17, 18 realisiert. Von den Verbindungsseiten 17, 18 ragt gegenüberliegend zu beiden Seiten der stift- beziehungsweise stabförmige zweite Griff 19 ab.

Das Ladekabel 2 ist dem Steckergehäuse 20 von oben im Bereich der Oberseite 15 zugeführt. Die Zuführung des Ladekabels 2 zu dem Steckergehäuse 20 erfolgt hierbei unter einem spitzen Winkel zu der Vertikalen.

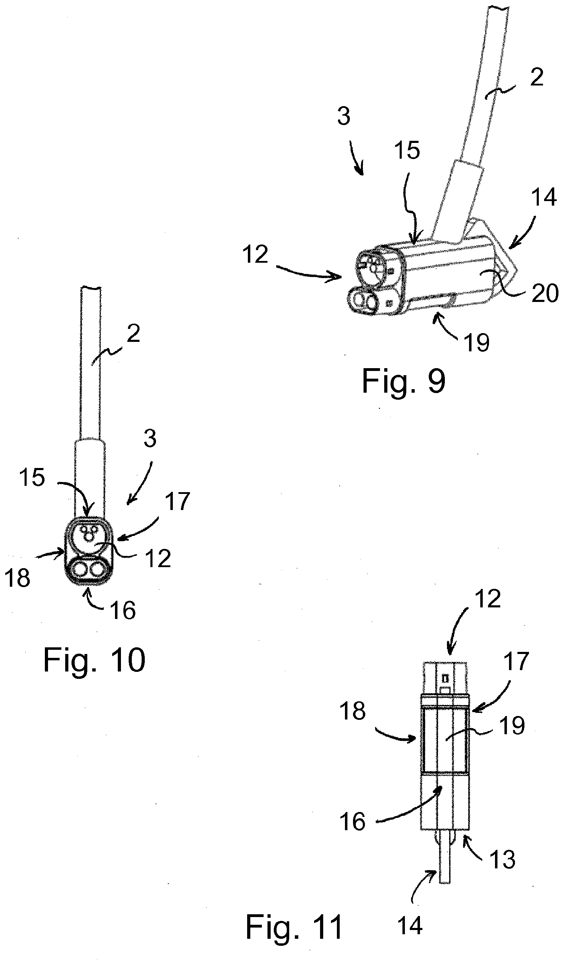

Nach einer zweiten Ausführungsform des Ladesteckers 3 nach den Fig. 9 bis 11 ist das Steckergehäuse 20 insbesondere in Bezug auf die Ausbildung und Anordnung der Griffe 14, 19 modifiziert ausgebildet. Es ist insofern so, dass der erste Griff 14 der Rückseite 13 des Steckergehäuses 20 zugeordnet ist und der zweite Griff 19 an der Unterseite 16 des Steckergehäuses 20 realisiert ist. Der zweite Griff 19 ist dabei muldenartig ausgebildet. Unverändert ist das Ladekabel 2 dem Steckergehäuse 20 von oben im Bereich der Oberseite 15 zugeordnet.

Gleiche Bauteile und Bauteilfunktionen sind durch gleiche Bezugszeichen gekennzeichnet.

Als Fahrzeuge im Sinne der Erfindung gelten alle Automobile (PKW, LKW, Wohnmobile, Zweiräder, Busse, Transporter usw.), Schienenfahrzeuge (insbesondere Lokomotiven), Wasserfahrzeuge (Schiffe), Luftfahrzeuge sowie Anhänger (Wohnanhänger), mobile Verkaufsstände usw. Die Ladestation kann ebenso verwendet werden zum Bereitstellen von elektrischer Energie für Fahrzeuge ohne Energiespeicher.

## Patentansprüche

1. Ladestation für Elektrofahrzeuge umfassend ein Gehäuse (1), umfassend ein aus dem Gehäuse (1) geführtes Ladekabel (2), umfassend einen an einem freien Ende des Ladekabels (2) festgelegten Ladestecker (3), umfassend eine Laufschiene (4), an der das Ladekabel (2) längsverschiebbar gehalten ist, und umfassend ein an der Laufschiene (4) gehaltenes Gewichtsausgleichsmodul (5), über das der Ladestecker (3) jedenfalls mittelbar gehalten ist, **dadurch gekennzeichnet, dass** das Gewichtsausgleichsmodul (5) längsverschiebbar an der Laufschiene (4) gehalten ist.

2. Ladestation nach Anspruch 1, **dadurch gekennzeichnet, dass** das Gewichtsausgleichsmodul (5) unmittelbar mit dem Ladekabel (2) verbunden ist, wobei ein zwischen dem Ladekabel (2) und einem Auszugsseil (9) des Gewichtsausgleichsmoduls (5) gebildeter Verbindungspunkt (8) beabstandet von dem freien Ende des Ladekabels (2) vorgesehen ist.

3. Ladestation nach Anspruch 1 oder 2, **dadurch gekennzeichnet, dass** der Ladestecker (3) ein Steckergehäuse (20) und an einer Vorderseite des Steckergehäuses (20) ein Steckgesicht (12) aufweist, wobei das Ladekabel (2) bezogen auf eine Verbindungsposition des Ladesteckers (3), in der der Ladestecker (3) an einem an dem Gehäuse (1) vorgesehenes Adapterelement und/oder an einem dem Elektrofahrzeug zugeordnetes Gegensteckelement angesetzt ist, dem Steckergehäuse (20) von oben zugeführt ist.

4. Ladestation nach einem der Ansprüche 1 bis 3, **dadurch gekennzeichnet, dass** das Ladekabel (2) als ein Hochstromladekabel ausgebildet ist.

5. Ladestation nach Anspruch 4, **dadurch gekennzeichnet, dass** das Ladekabel (2) als ein luftgekühltes und/oder als ein flüssigkeitsgekühltes Hochstromladekabel ausgebildet ist.

6. Ladestation nach einem der Ansprüche 1 bis 5, **dadurch gekennzeichnet, dass** der Ladestecker (3) für eine Zweihandbedienung ausgebildet ist und einen ersten Griff (14) sowie einen zweiten Griff (19) aufweist.

7. Ladestation nach einem der Ansprüche 1 bis 6, **dadurch gekennzeichnet, dass** die Laufschiene (4) horizontal geneigt angeordnet ist, wobei ein dem Gehäuse (1) zugewandtes Ende der Laufschiene (4) unterhalb eines freien Endes der Laufschiene (4) vorgesehen ist.

8. Ladestation nach Anspruch 7, **dadurch gekennzeichnet, dass** ein Neigungswinkel (6) für die Laufschiene (4) im Bereich von 0° bis 15° bezogen auf die Horizontale vorgesehen ist.

9. Ladestation nach einem der Ansprüche 1 bis 8, **dadurch gekennzeichnet, dass** das Gewichtsausgleichsmodul (5) in der Laufschiene (4) manuell verschiebbar gehalten ist.

10. Ladestation nach einem der Ansprüche 1 bis 9, **dadurch gekennzeichnet, dass** ein dem Gewichtsausgleichsmodul (5) zugeordneter Antrieb vorgesehen ist, wobei der Antrieb ausgebildet ist zum aktiven Verfahren des Gewichtsausgleichsmoduls (5) in der Laufschiene (4).

11. Ladestation nach einem der Ansprüche 1 bis 10, **dadurch gekennzeichnet, dass** der Verbindungspunkt (8) an dem Ladekabel (2) bezogen auf eine Länge des Ladekabels (2) derart beabstandet zu dem freien Ende des Ladekabels (2) vorgesehen ist, dass ein Abstand zwischen dem freien Ende des Ladekabels (2) und dem Verbindungspunkt (8) wenigstens der 0,1-fachen Länge des Ladekabels (2) entspricht.

12. Ladestation nach einem der Ansprüche 1 bis 11, **dadurch gekennzeichnet, dass** eine Länge (7) der Laufschiene (4) einem 0,2-fachen bis 0,8-fachen der Länge des Ladekabels (2) entspricht.

13. Ladestation nach einem der Ansprüche 1 bis 12, **dadurch gekennzeichnet, dass** das Gewichtsausgleichsmodul (5) als ein manuell betätigbarer Balancer ausgebildet ist derart, dass eine federbelastete Seilwinde für das Auszugsseil (9) vorgesehen ist.

14. Ladestation nach einem der Ansprüche 1 bis 12, **dadurch gekennzeichnet, dass** das Gewichtsausgleichsmodul (5) aktiv ausgebildet ist mit einer motorisch betätigten Seilwinde für das Auszugsseil (9), welche zur Unterstützung einer Betätigungsbewegung angetrieben wird, sodass eine Zug- und/oder Schubbelastung auf das Ladekabel (2) aufgeprägt ist.

15. Ladestation nach einem der Ansprüche 1 bis 14, **dadurch gekennzeichnet, dass** das Ladekabel (2) unter einem spitzen Winkel zur Vertikalen nach unten und/oder unter einem spitzen Winkel zur Vertikalen nach oben von dem Gehäuse (1) geführt ist.
